(19) Europäisches Patentamt
European Patent Office
Office européen des brevets

(11) EP 4 459 510 A1

(12) EUROPEAN PATENT APPLICATION

(43) Date of publication:
**06.11.2024 Bulletin 2024/45**

(21) Application number: **23171686.1**

(22) Date of filing: **04.05.2023**

(51) International Patent Classification (IPC):
***G06N 3/098*** *(2023.01)* ***G06N 3/084*** *(2023.01)*
***G06N 3/09*** *(2023.01)* ***G06N 3/045*** *(2023.01)*
*G06N 3/063 (2023.01)*

(52) Cooperative Patent Classification (CPC):
**G06N 3/045; G06N 3/084; G06N 3/09; G06N 3/098;**
G06N 3/0464; G06N 3/063

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Munster Technological University**
**Bishopstown T12 P928 Cork (IE)**

(72) Inventor: **The designation of the inventor has not yet been filed**

(74) Representative: **Purdylucey Intellectual Property**
**6-7 Harcourt Terrace**
**D02 FH73 Dublin 2 (IE)**

(54) **ON-AIR SPLIT FEDERATED LEARNING WITH POSITIVE LABELS**

(57) Disclosed is a system for split federation learning of a machine learning model with positive labels. The system includes a plurality of clients and a main server, wherein the machine learning model is divided into a client-side model portion for providing to each client, and a server-side model portion for providing to the main server. The system further includes an on-air server collector in communication with the plurality of clients and the main server. The on-air collector is configured to shuffle the plurality of activations and labels received from the plurality of clients, and transmit shuffled data to the main server, receive a plurality of gradients from the main server in response to respective plurality of shuffled activations and labels, and de-shuffles the plurality of gradients for transmitting back to the plurality of clients. The clients update respective model weights based on the de-shuffled gradients, and transmit updated model weights to a federation server for the purpose of aggregating the updated model weights to generate a trained machine learning model.

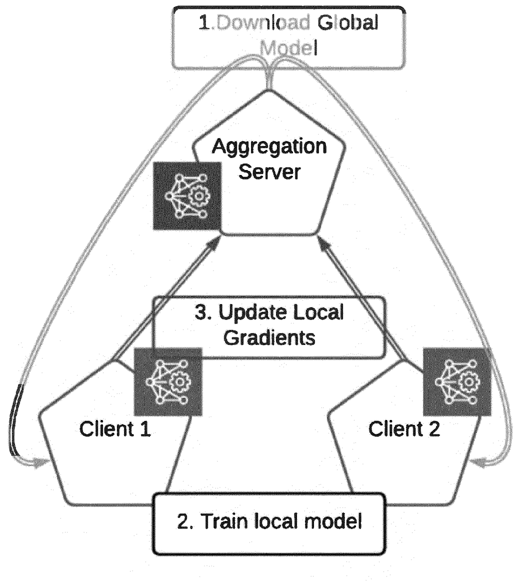


FIG.1



Processed by Luminess, 75001 PARIS (FR)

## Description

### Field

This invention relates to machine learning models, and more particularly to training and learning of the machine learning models.

### Background of Invention

In traditional centralized deep learning (DL) training, all required data is accumulated from edge devices such as mobile phones, laptops, etc. to be stored centrally on cloud servers. Distributed data parallelism or model parallelism techniques then enables central cloud servers to utilize multiple machines in parallel to train deep learning models to overcome issues related to storage and computational capacity. However, data privacy concerns and regulations like GDPR challenge this approach.

Federated Learning enables devices (clients) and servers to collaboratively learn a shared prediction model while keeping all the training data on the device. As shown in FIG.1, during the first stage, the clients download a global DNN model from an aggregation server (responsible for maintaining the global DNN model). Once the global DNN model is received, the clients train the DNN model on the private data stored in the server, making it a local DNN model. Once training is completed on the client, the local model weights are sent to an aggregation server. Once the aggregation server receives all the weights from the participant clients, it is then aggregated to formulate a new global DNN model. After aggregation, the global DNN model is again circulated to the client servers for further training, making the whole approach cyclic. This framework must ensure that the performance of the aggregated global model should be better than any of the individual client-side models before being disseminated.

FIG.2 illustrates split learning cases where a seven-layer neural network is split into two sub-networks using layer 2 as the "cut layer". After the split, the two sub-networks are distributed between the client which trains the initial two layers of the network and the server which trains the last five layers of the network. At the time of training, the client initiates the forward propagation of its confidential data and sends the activation from the cut layer to the server-side sub- network. The server then continues the forward propagation and calculates the loss. During backpropagation over the loss, gradients are computed and propagated initially in the server sub-network and then relayed back to the client-side sub-network.

In FL, clients train their DL models locally, and only model parameters are sent to a central-cloud server for aggregation. Despite its privacy benefits, FL needs help with large DL models requiring extensive resources, limiting adoption on resource-constrained devices. SL addresses this by splitting DL models between the client and server side, but it can only train one client at a time, causing idle periods for other clients.

To mitigate the problem faced by FL framework regarding the scarcity of computational resources available with clients and the inability of SL framework to train the DL model in multiple clients, split-fed learning (SFL) had been proposed. In SFL, the whole DL model is split into multiple portions, and is assigned a part of the model to server(s) for assisted training. Specifically, the client-side model portion performs forward propagation and sends the activations from the cut layer to the server-side to complete server-side model training. Thereby, the SFL mitigates the client's side memory and computation burden and at the same time provides the capability to do parallel client-side forward and backward propagation. Although SFL has shown some interesting breakthroughs for resource-constrained devices, its performance with extreme non-IID or clients with only positive labels is very poor, as compared to centralised version of the DNN model.

FIG. 3 illustrates two types of split fed learning, SFLV1 and SFLV2. In SFLV1, each client has its own corresponding server-side network in the main server, i.e., number of client-side models are equal to the number of server-side models as explained in the earlier paragraph. In SFLV2, there are multiple clients but only a single server. Therefore, each client-side model sends its activations to a single common server-side sub-network, thereby reducing the required aggregation step and the need to keep the multiple copies of the server-side networks as compared to SFLV1. Moreover, as the server keeps only one copy of the server-side sub-network, it makes the server-side do forward and backward pass sequentially with each of the client's data (activations of the cut layer). After each forward and backward pass, all client-side models and server-side models aggregate their weights and form the one global model, specifically in SplitFedV1. The aggregation is done independently at the client-side (by using fed server) and server-side. In another version of the SFL called SplitFedV2, the authors changed the training setting for the server-side model. Instead of aggregating the server-side model at each epoch, the server keeps training one server-side model with the activation vectors from all the clients.

Catastrophic Interference is a phenomenon in machine learning where a model trained on one task forgets what it has learned on previous tasks when fine-tuned on a new task. In the context of SFLv2, where multiple models are trained on different subsets of non-IID data, catastrophic interference can occur because of the mismatch between the distribution of data across the subsets and sequential training with the server-side model portion. Further, weight divergence in the SFLv2 learning refers to the dissimilarity between the aggregated model parameters at the client-side model portion. This phenomenon arises due to the presence of non-IID data distribution, where each client possesses a distinct data distribution.

In view of the above, there is a need for a system and method that tackles the challenge of distributed learning using resource constrained devices that only have access to positive labels.

Summary of the Invention

In an aspect of the present invention, there is provided a system for split federation learning of a machine learning model with positive labels. The system includes a plurality of clients and a main server, wherein the machine learning model is divided into a client-side model portion for providing to each client, and a server-side model portion for providing to the main server, and an on-air server collector in communication with the plurality of clients and the main server. The plurality of clients is configured to perform forward propagation on the client-side model portion using training data, and respective model weights, and transmit respective plurality of activations and labels to the on-air collector. The on-air collector is configured to: shuffle the received plurality of activations and labels, and transmit shuffled data to the main server, for forward propagation on the server-side model portion; receive a plurality of gradients from the main server in response to respective plurality of shuffled activations and labels; and de-shuffles the plurality of gradients for transmitting back to the plurality of clients. The plurality of clients receives the plurality of de-shuffled gradients, and updates and transmits respective plurality of model weights to a federation server for the purpose of aggregating the updated model weights to generate a trained machine learning model.

In an embodiment of the present invention, each client has access to single label based training data for training the machine learning model, and wherein each client is configured not to communicate with another client, and not access the classification model parameters associated with classes of other clients.

In an embodiment of the present invention, the on air-collector de-shuffles the plurality of gradients to nullify previous effect of shuffling of the activations, and provide each gradient back to respective client against corresponding activation.

In an embodiment of the present invention, the main server is configured to: receive the plurality of shuffled activations and labels from the on air-collector; initialize a plurality of global model weights; compute a plurality of predicted labels; evaluate a plurality of losses; and determine a plurality of gradients for sending back to the on-air collector.

In an embodiment of the present invention, the on-air collector is configured to wait for a predefined number of clients to participate in passing the activations received from each client to the main server.

In an embodiment of the present invention, at each client, the behaviour of the batch normalisation layer inside the DNN layer is changed, to utilise current mean and variance at evaluation time.

In another aspect of the present invention, there is provided a method for split federation learning of a machine learning model with positive labels. The method includes dividing the machine learning model into a client-side model portion for providing to each client of a plurality of clients, and a server-side model portion for providing to a main server, performing by the on-air collector, the steps of shuffling the plurality of activations and labels received from each client, transmitting shuffled data to the main server, for forward propagation on the server-side model portion, receiving a plurality of gradients from the main server in response to respective plurality of shuffled activations and labels, and de-shuffling the plurality of gradients for transmitting back to the plurality of clients. The method further includes receiving at each client, a gradient against respective activation, updating by each client, respective plurality of model weights; and transmitting updated model weights to a federation server for the purpose of aggregating the updated model weights to generate a trained machine learning model.

In an embodiment of the present invention, the method further includes de-shuffling the plurality of gradients to nullify previous effect of shuffling of the activations, and providing each gradient back to respective client against corresponding activation.

In an embodiment of the present invention, the method further includes performing by the main server, the steps of: receiving the plurality of shuffled activations and labels from the on air-collector; initializing a plurality of global model weights; computing a plurality of predicted labels; evaluating a plurality of losses; and determining a plurality of gradients for sending back to the on-air collector.

In an embodiment of the present invention, the method further includes waiting by the on air-collector for a predefined number of clients to participate in passing the activations received from each client to the main server.

In an embodiment of the present invention, the method further includes changing the behaviour of the batch normalisation layer inside the DNN layer at each client, to utilise current mean and variance at evaluation time.

Various embodiments of the present invention provide a system and method of distributed learning using resource-constrained devices that only have access to positive labels. A split-fed learning with positive labels (SFPL) is provided, to minimize the expected risk from antagonistic classes by introducing a collector server. The SFPL would greatly help in settings that include decentralized training of face recognition models, speaker identification models, disease identification, medicine tailoring, and personalisation of consumer services to name a few, where the classifiers of the users also constitute sensitive information that cannot be shared with other users. It also works efficiently in a resource-constrained environment where huge computational power isn't available to the clients.

The SFPL can also be extended to the case, where each user has access to data associated with a small number of classes. For example, one application is deep retrieval in the split federated setting: training a query to document relevance model based on user interactions such as clicked documents after issuing a query, assuming that the clicks do not get recorded by a central server.

## Brief Description of the Drawings

The invention will be more clearly understood from the following description of an embodiment thereof, given by way of example only, with reference to the accompanying drawings, in which:-

FIG.1 illustrates Federated learning among the clients and server to collaboratively learn a shared prediction model;
FIG.2 illustrates split learning among the clients and server;
FIG.3 illustrates two types of split fed learning;
FIG.4 illustrates an architecture of an existing split federated learning system SFLV2;
FIG.5 illustrates an on-air split federated learning system (OASFL), in accordance with an embodiment of the present invention;
FIG.6 is a flowchart illustrating a method for split federation learning with positive labels, in accordance with an embodiment of the present invention; and
FIG.7 illustrates initial results of the experiments available for the smaller version of DNN architecture for various learning systems, when introduced to the extreme non-IID setting.

## Detailed Description of the drawings

FIG.4 illustrates an architecture of an existing split federated learning system SFLV2 400. As illustrated above, the SFLV2 400 includes a federation server 402, a plurality of clients 404(1), 404(2), 404(3), and a main server 406. A typical machine learning model is split among the clients and the main server, so that each client has a client-side model part, and the main server has a server side model part. The clients 404(1), 404(2), 404(3) collaboratively learn the classification model along with the server-side model part. The machine learning model is a deep neural network (DNN) model (referred to as 'W') is split into two portions, the client-side model '*W_c*' portion and the server-side model *'W_s'* portion. The client-side models are represented by '$W_c_i$, where 'i' ∈ {1,2,. ..., N} is the client's label. The global model *'W'* is formed by concatenating the *'W_c'* and *'W_s',* i.e., [*W_c, W_s*] once the training completes. This global model *'W'* is then used for inference on real-world data.

In SFLV2, it is primarily focussed, that the clients possess positive labels and assume that each client has access to data from only one class. Let X denote the specific set of instances used in the study, and X represents a subset of X employed in a specific batch. Given that there are C classes indexed by the set [C], and the total number of participating clients is N, the number of distinct sets [C] equals N, with both [C] and N ∈ N. It can be assumed that the N clients collaboratively train for t ∈ N(N = 1, ... , T) epochs and communicate with the server-side model in a random order, once per epoch. FIG.5 illustrates a split federated positive label learning system (SFPL) 500, in accordance with an embodiment of the present invention.

The SFPL 500 is a modified version of SFLV2, and includes a fed-server 502, a plurality of clients 504(1), 504(2) till 504(n), an on-air collector 506, and a main server 508.

In the SFPL 500, each user/client has only access to a single class. The users are not allowed to communicate with each other, nor do they have access to the classification model parameters associated with other users' classes. Examples of such settings include decentralized training of face recognition models or speaker identification models, where in addition to the user specific facial images and voice samples, the classifiers of the users also constitute sensitive information that cannot be shared with other users. Due to the very nature of privacy preservation, deep learning training for isolated data without any overhead of data obfuscation, can be easily extended but not limited to the domain such as healthcare, finance, energy, consumer services, telecom and utilities.

The SFPL 500 is a modification of SFLV2 400 in the paradigm of extreme non-IID settings. In the SFPL 500, at each client, the behaviour of the batch normalisation layer inside the DNN layer is changed, to utilise the current mean and variance at the evaluation time instead of running mean and variance. The running mean and variance and status are not considered while evaluation due to constant shift in data distribution from individual clients. However, the current batch mean and variance are computed while training and evaluation time to make different data distribution to follow zero mean and unit variance to avoid exploding gradients and internal covariant shift.

In deep learning models, Batch Normalization (BN) is a technique used to increase the stability of a neural network. It normalizes the input layer by adjusting and scaling the activations. This helps to improve the speed, performance, and stability of artificial neural networks. The BN layer computes the mean and variance of the current mini-batch of inputs during training time. These are known as the "current mean" and "current variance". The BN layer uses these values to normalize the inputs, which helps to mitigate the problem of internal covariate shift (the change in the input distribution to a learning system). The normalized inputs are then scaled by a learned pair of parameters (one for scaling, one for shifting). However, during evaluation (or inference) time, there is only one example, not a batch. So, it is not possible to compute the mean and variance of the batch. Instead, the "running mean" and "running variance" are being used. These are estimates of the population mean and variance calculated during training. They are updated each batch in a moving average manner.

The difference between the "running" and "current" mean and variance is that the "current" mean and variance are calculated from the current mini-batch during training, while the "running" mean and variance are a moving average of the means and variances of the means and variances of all the mini-batches seen so far during training. They are used during inference to give a more general and stable normalization instead of being overly sensitive to the specific instance being evaluated. This allows the model to apply consistent normalization to the data during both training and inference, which can help to prevent overfitting to the specific statistics of the training data and improve generalization to unseen data.

In the specific scenario of the present invention, extremely non-identically and independently distributed (non-iid) data is being dealt with. This presents a unique challenge, as the usual practice of calculating running mean and variance for the client-side model split isn't applicable. Instead, for the evaluation or inference phase of the deep learning model of the present invention, the current mean and current variance calculated from the specific batch being tested is leveraged. This allows to better handle the extreme non-iid nature of the distribution, providing a more accurate and representative normalization for each batch.

It's important to note that during training, both the "current" mean and variance and the "running" mean and variance are used: the "current" values are used for normalizing the current batch and backpropagation, and the "running" values are updated with the "current" values. But during inference, only the "running" mean and variance are used as these are a better reflection of the overall data distribution seen during training.

The running mean and variance may be typically calculated during training as follows:

1. Initialize a running mean and variance to 0.
2. For each mini-batch, compute the mini-batch mean and variance.
3. Update the running mean and variance with a momentum term (typically around 0.9 or 0.99).

The running mean and variance may be typically calculated during inference as follows: 1)Use the "running" mean and variance (which have been learned during training) to normalize the data.

This ensures that the running mean and variance are a sort of "summary" of the means and variances of all the mini-batches seen during training, and they provide a more stable estimate for normalization during inference.

Once the DNN model 'W' is split into two portions; the client-side model *W_c* and the server-side model '*W_s* portion, all clients perform forward propagation on their client-side model in parallel and pass their smashed data to the on-air collector 506. The on-air collector 506 waits for a minimum 'm' number of clients to participate in the forward pass. Once a minimum number of clients is reached, the on-air server collector 506 shuffles the data and passes it on to the main server 508.

The on-air collector 506 is configured to collect the activations flowing through the clients 504(1) till 504(n) to the main server 508 during the forward pass. In contrast to SFLV2 400, a now richer collection of batch data has formulated because the on-air collector 506 provides more intuition to the server-side model regarding the global data distribution which helps in better training of model at the server-side model part.

Then, the main server 508 processes the forward propagation and back-propagation on its server-side model with each client's smashed data separately, in somewhat parallel. It then sends the gradients of the smashed data to the on-air collector 506. The on-air collector 506 collects the gradients and de-shuffles them so that corresponding gradients to the activations received from the respective clients can be propagated back.

The on-air collector 506 facilitates the communication between the clients 504(1) till 504(n) and the main server 508. The on-air collector 506 not only enforces the hyper-parameters necessary in the heterogeneous environment for proper training but also helps in formulating the batch data which can be ingested to the server-side model portion. The on-air collector 506 is also configured to provide the gradients back to clients against the respective activations received from them, thus acting like a thin layer of memory which need not be differentiable, but is an inherent part of DNN model training.

The clients 504(1) till 504(n) receive the gradients of their smashed data, and each client then performs the backpropagation on their client-side local model and computes its gradients. The fed server 502 conducts the FedAvg of the client-side local updates and sends them back to all participating clients 504(1) till 504(n). The forward-backward propagations of the server-side mode takes place sequentially with respect to the client's smashed data.

In entirety, the SFPL 500 performs the following functions:

1. EnsureClientUpdate: The clients 504(1) till 504(n) perform forward propagation using local data $X_k$ and model weights $W_{k,t}^{C}$. They send activations $A_{k,t}$ and true labels $Y_k$ to the on-air collector 506, the client receives gradient $dA_{k,t}$, updates the client model weights, and sends them to the Fed Server 502 for averaging.

2. EnsureGlobalCollector: The on-air collector 506 collects activations and true labels from the clients 504(1) till 504(n), shuffles and sends them to the main server 508, receives gradient $dA_{k,t}$, de-shuffles, and sends back to the clients 504(1), 504(2) till 504(n).

Here are a few reasons and scenarios which require shuffling of activation stacks for extreme non-i.i.d data:

1) Prevent Overfitting: Training server-side model portion on non-shuffled activation stacks could cause the model to overfit to certain sub-groups of data if they're presented consecutively. Shuffling can help to spread out the different sub-groups and prevent the model from learning patterns specific to the order of the client's participation.

2) Improve Generalization: Shuffling activation ensures that the server-side model portion gets a good mix of different types of activation stacks throughout the training process, which can help the model generalize better to unseen data. This is particularly important in extreme non-i.i.d data where specific categories or classes may be over or underrepresented.

3) Bias Mitigation: In non-i.i.d data, there can be a systematic bias where certain classes or data types are more prevalent. If the activations are not shuffled, the server-side model portion might see all of one class before moving on to another, leading to a form of bias. Shuffling can help mitigate this by ensuring the model sees a variety of classes throughout training.

4) Stable Convergence: Training on non-shuffled activation stacks can lead to unstable convergence or the model could get stuck in a poor local minimum. Shuffling can help to prevent this by providing a more stochastic (random) gradient estimate, making it more likely that the model will converge to a good solution.

In the context of highly non-identically and independently distributed (non-iid) data, each client possesses data strictly belonging to a single class. During the client-side model processing, the data undergoes an activation function, producing a response specific to the input data, which is then transmitted to the on-air collector 506 in the form of an activation stack.

As the on-air collector 506 awaits the participation of numerous clients, it sequentially accumulates the activation stacks received from each of them. If this accumulated activation stack is transferred to the server-side model for training without any modification or shuffling, the server-side model is likely to fail in its learning process due to the aforementioned circumstances.

Therefore, the activation stack undergoes a shuffling process before being transmitted to the server-side model, which aids in mitigating the learning failure. The on-air collector 506 also maintains a record of the shuffling sequence, which becomes crucial when the gradients are returned from the server-side model.

After the server-side model performs forward propagation, computes the loss, and conducts backward propagation on its end, it transfers the gradients back to the on-air collector 506. The on-air collector 506 then de-shuffles the gradients in accordance with the previously recorded shuffling sequence, ensuring that the gradients are correctly matched with the respective client data. These gradients are then relayed to the clients in the same order in which the activation stacks were initially received for client-side backward propagation.

```
/* Runs on Server */
```

**EnsureGlobalCollector**($\mathbf{A}_{k,t}, \mathbf{Y}_k$):

Initialize activation and label stack:

ActivationStack $= \phi$

LabelStack $= \phi$

**for** *each client* $k \in S_t$, *in parallel* **do**

Receive $\mathbf{A}_{k,t}$ and $\mathbf{Y}_k$ from ClientUpdate($\mathbf{W}^{\mathbf{C}}_{k,t}$)

Store ($\mathbf{A}_{k,t}$, $\mathbf{Y}_k$) in ActivationStack and LabelStack with the client's ID $k$ as its key.

Wait until $count$(ActivationStack) $= \alpha N$

$\mathbf{A}^{'}_{\mathbf{k,t}}, \mathbf{Y}^{'}_{\mathbf{k}} \leftarrow$ Shuffle ($\mathbf{A}_{k,t}$, $\mathbf{Y}_k$)

Send shuffled ActivationStack and LabelStack to main server

Wait for the main server to execute

Receive ($d\mathbf{A}_{k,t}$) from main server

De-shuffle ($d\mathbf{A}_{k,t}$)

Send $d\mathbf{A}_{k,t}$ back to the respective clients

3. EnsureMainServer: The main server 508 receives shuffled activations and labels, initializes global model weights $W_t^S$, computes predicted labels $\widehat{Y_k}$, evaluates loss, and determines gradient $dA_{k,t}$ to send back to the on-air collector 506.

**EnsureMainServer**($\mathbf{A}_{k,t}$, $\mathbf{Y}_k$)
**if** time instance $t$=$0$ **then**
$\mathbf{W}_t^S$ (global server-side model) is initialized
**else**
Global_collector = { }
Gradient_collector = { }

/* $\mathbf{W}_t^S$ is continuously updated */
Forward propagation with $\mathbf{A}'_{k,t}$ on $\mathbf{W}_t^S$, compute $\hat{\mathbf{Y}}'_k$
Loss calculation with $\mathbf{Y}'_k$ and $\hat{\mathbf{Y}}_k$
Back-propagation calculate $\nabla\ell_k(\mathbf{W}_t^S; \mathbf{A}_t^S)$
Collect $d\mathbf{A}_{k,t} := \nabla\ell_k(\mathbf{A}_t^S; \mathbf{W}_t^S)$ ( i.e., gradient of the $\mathbf{A}'_{k,t}$) in Gradient_collector.
Send $d\mathbf{A}_{k,t}$ to GlobalCollector

4. EnsureClientBackprop: The clients 504(1) till 504(n) receive gradient $dA_{k,t}$ perform back-propagation, calculate gradients $\nabla\ell_k(W_{k,t}^C)$, and update model weights.

/* Runs on Client $k$ */
**EnsureClientBackprop**($d\mathbf{A}_{k,t}$):
$d\mathbf{A}_{k,t} \leftarrow$ GlobalCollector()
Back-propagation, calculate gradients $\nabla\ell_k(\mathbf{W}_{k,t}^C)$ with $d\mathbf{A}_{k,t}$
Update $\mathbf{W}_{k,t}^C \leftarrow \mathbf{W}_{k,t}^C - \eta\nabla\ell_k(\mathbf{W}_{k,t}^C)$

5. EnsureClientFedServer: This function collects model weights from the clients 504(1) till 504(n), computes average model weights for the global model, and updates each client's model weights.

/* Runs on Client $k$ */
**EnsureClientBackprop**($d\mathbf{A}_{k,t}$):
$d\mathbf{A}_{k,t} \leftarrow$ GlobalCollector()
Back-propagation, calculate gradients $\nabla\ell_k(\mathbf{W}_{k,t}^C)$ with $d\mathbf{A}_{k,t}$
Update $\mathbf{W}_{k,t}^C \leftarrow \mathbf{W}_{k,t}^C - \eta\nabla\ell_k(\mathbf{W}_{k,t}^C)$

With the presented architectures, it will now be possible to retain all the benefits provided SFLV2 along with the comparable or surpassing results as seen in the centralised version of the DNN model.

FIG.6 is a flowchart illustrating a method for split federation learning with positive labels, in accordance with an embodiment of the present invention.

At step 602, the machine learning model is divided into a client-side model portion for providing to each client of a plurality of clients, and a server-side model portion for providing to a main server.

At step 604, an on-air collector is provided, that is in communication with the plurality of clients and the main server.

At step 606, a plurality of activations and labels from each client at the on-air collector based on forward propagation on the client-side model portion using training data.

At step 608, the received plurality of activations and labels are shuffled at the on-air collector.

At step 610, shuffled data is transmitted from the on-air collector to the main server, for forward propagation on the server-side model portion.

At step 612, a plurality of gradients is received from the main server in response to respective plurality of shuffled activations and labels.

At step 614, the plurality of gradients is de-shuffled by the on-air collector for transmitting back to the plurality of clients, wherein the plurality of clients updates respective plurality of model weights based on the de-shuffled gradients, and transmit updated model weights to a federation server for the purpose of aggregating the updated model weights to generate a trained machine learning model.

FIG.7 illustrates initial results of the experiments available for the smaller version of DNN architecture (ResNet -8, 32 and 56) for various learning systems, when introduced to the extreme non-IID setting. Each client has access to positive data associated with one label. At no point in time, the clients are allowed to share their data with any other user. Also, the full classification model is shared with any individual users or server. The results presented are based on performance of ResNet-8, ResNet-32 and ResNet-56 on CIFAR-10 and CIFAR-100 dataset. It is empirically demonstrated that SFPL performance is close to that of the centralized model and outperforms performance by the SFLv2 learning method.

The invention is not limited to the embodiments hereinbefore described but may be varied in both construction and detail.

In the specification, the terms "comprise, comprises, comprised and comprising" or any variation thereof and the terms include, includes, included and including" or any variation thereof are considered to be interchangeable, and they should all be afforded the widest possible interpretation and vice versa.

## Claims

1. A system for split federation learning of a machine learning model with positive labels, comprising:

    a plurality of clients and a main server, wherein the machine learning model is divided into a client-side model portion for providing to each client, and a server-side model portion for providing to the main server;
    an on-air server collector in communication with the plurality of clients and the main server;
    wherein the plurality of clients is configured to perform forward propagation on the client-side model portion using training data, and respective model weights, and transmit respective plurality of activations and labels to the on-air collector;
    wherein the on-air collector is configured to:

        shuffle the received plurality of activations and labels, and transmit shuffled data to the main server, for forward propagation on the server-side model portion;
        receive a plurality of gradients from the main server in response to respective plurality of shuffled activations and labels; and
        de-shuffles the plurality of gradients for transmitting back to the plurality of clients;

    wherein the plurality of clients receives the plurality of de-shuffled gradients, and updates and transmits respective plurality of model weights to a federation server for the purpose of aggregating the updated model weights to generate a trained machine learning model.

2. The system as claimed in claim 1, wherein each client has access to single label based training data for training the machine learning model, and wherein each client is configured not to communicate with another client, and not access the classification model parameters associated with classes of other clients.

3. The system as claimed in any preceding claim, wherein the on air-collector de-shuffles the plurality of gradients to nullify previous effect of shuffling of the activations, and provide each gradient back to respective client against corresponding activation.

4. The system as claimed in any preceding claim 1, wherein the main server is configured to:

receive the plurality of shuffled activations and labels from the on air-collector;
initialize a plurality of global model weights;
compute a plurality of predicted labels;
evaluate a plurality of losses; and
determine a plurality of gradients for sending back to the on-air collector.

5. The system as claimed in as claimed in any preceding claim, wherein the on-air collector is configured to wait for a predefined number of clients to participate in passing the activations received from each client to the main server.

6. The system as claimed in as claimed in any preceding claim, wherein at each client, the behaviour of the batch normalisation layer inside the DNN layer is changed, to utilise current mean and variance at evaluation time.

7. A method for split federation learning of a machine learning model with positive labels, comprising:

dividing the machine learning model into a client-side model portion for providing to each client of a plurality of clients, and a server-side model portion for providing to a main server;
providing an on-air collector, that is in communication with the plurality of clients and the main server;
performing at the on-air collector, the steps of:

receiving a plurality of activations and labels from each client based on forward propagation on the client-side model portion using training data;
, shuffling the received plurality of activations and labels;
transmitting shuffled data to the main server, for forward propagation on the server-side model portion;
receiving a plurality of gradients from the main server in response to respective plurality of shuffled activations and labels; and
de-shuffling the plurality of gradients for transmitting back to the plurality of clients, wherein the plurality of clients updates respective plurality of model weights based on the de-shuffled gradients, and transmit updated model weights to a federation server for the purpose of aggregating the updated model weights to generate a trained machine learning model.

8. The method as claimed in claim 7, wherein each client has access to single label based training data for training the machine learning model, and wherein each client is configured not to communicate with another client, and not access the classification model parameters associated with classes of other clients.

9. The method as claimed in preceding claims 7 to 8 further comprising de-shuffling the plurality of gradients to nullify previous effect of shuffling of the activations, and providing each gradient back to respective client against corresponding activation.

10. The method as claimed in preceding claims 7 to 9 further comprising:
performing by the main server, the steps of:

receiving the plurality of shuffled activations and labels from the on air-collector;
initializing a plurality of global model weights;
computing a plurality of predicted labels;
evaluating a plurality of losses; and
determining a plurality of gradients for sending back to the on-air collector.

11. The method as claimed in preceding claims 7 to 10 further comprising waiting by the on air-collector for a predefined number of clients to participate in passing the activations received from each client to the main server.

12. The method as claimed in preceding claims 7 to 11, further comprising changing the behaviour of the batch normalisation layer inside the DNN layer at each client, to utilise current mean and variance at evaluation time.

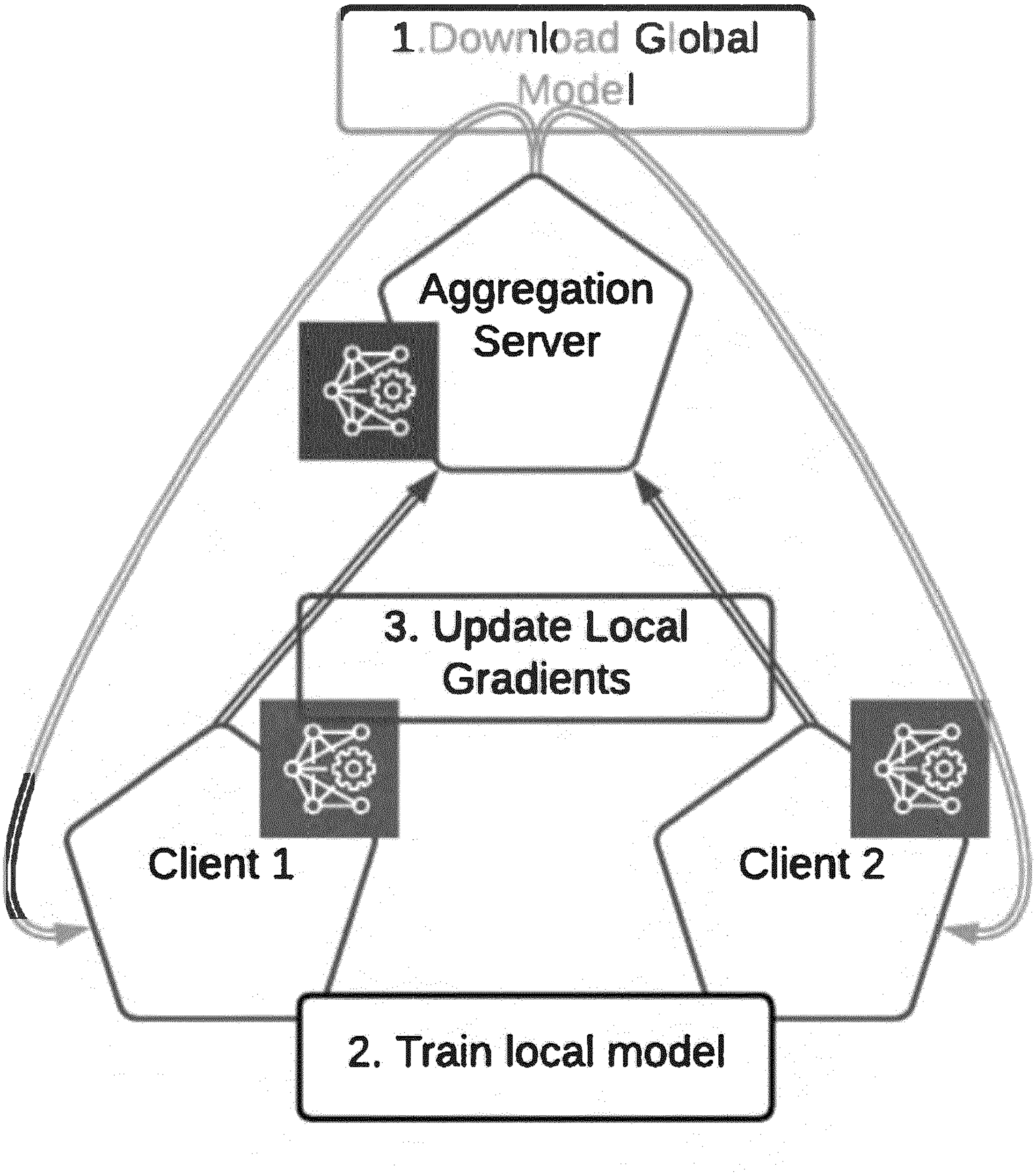
1.Download Global Model
Aggregation Server
3. Update Local Gradients
Client 1
Client 2
2. Train local model

FIG.1

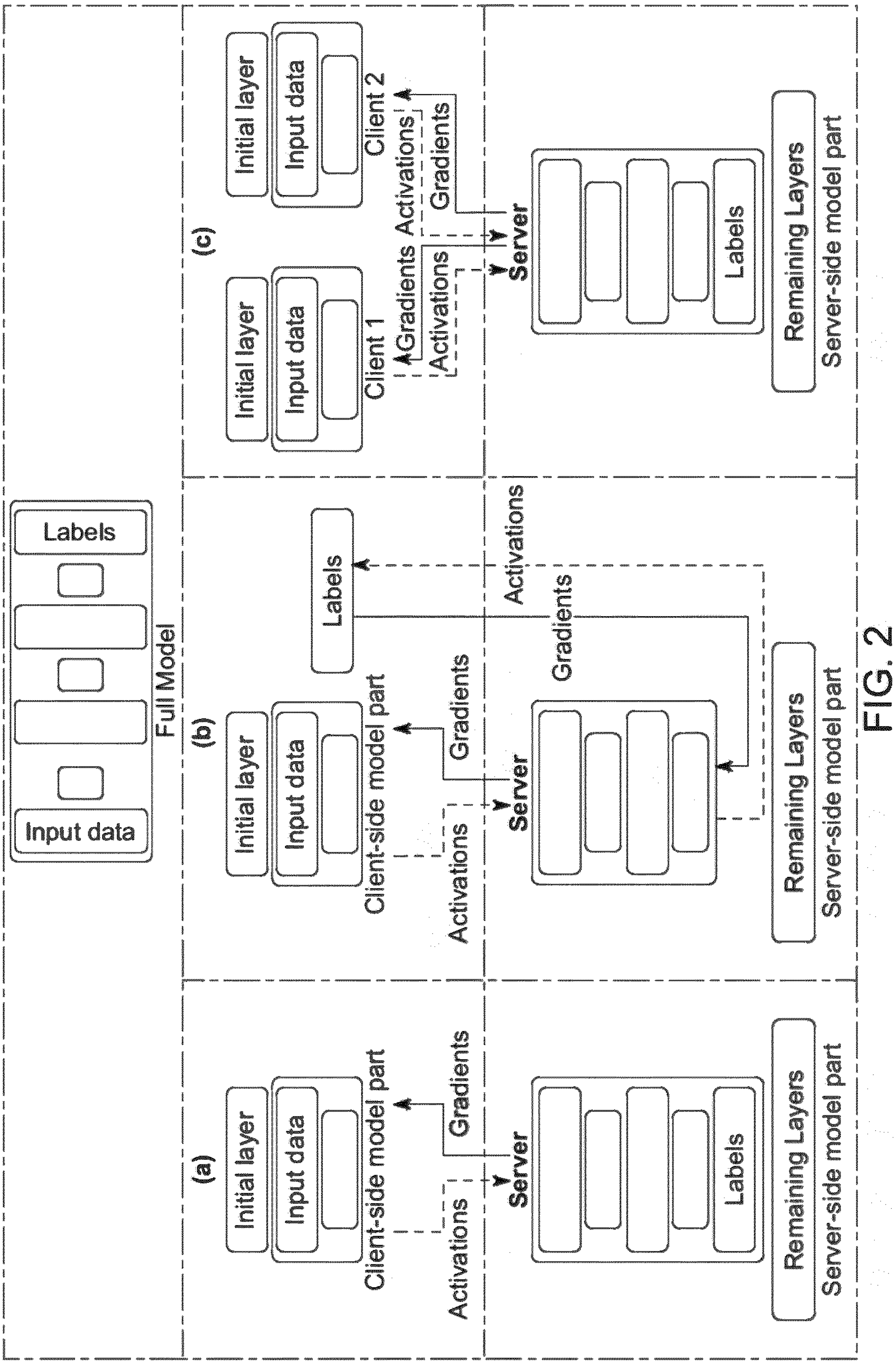


FIG. 2
(PRIOR ART)

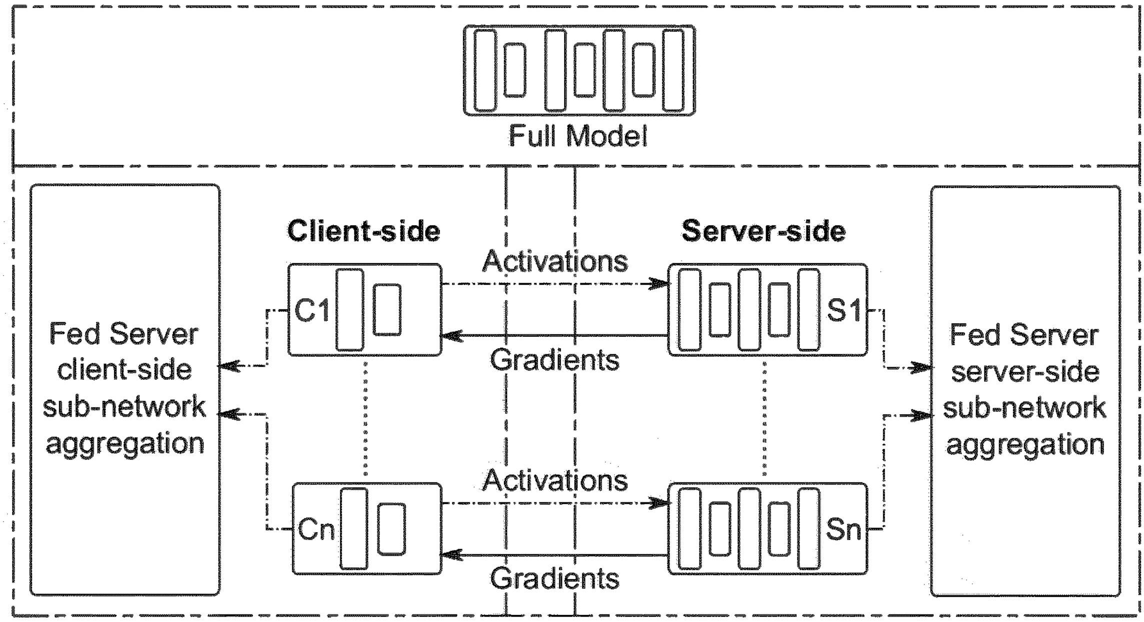


FIG. 3A
(PRIOR ART)

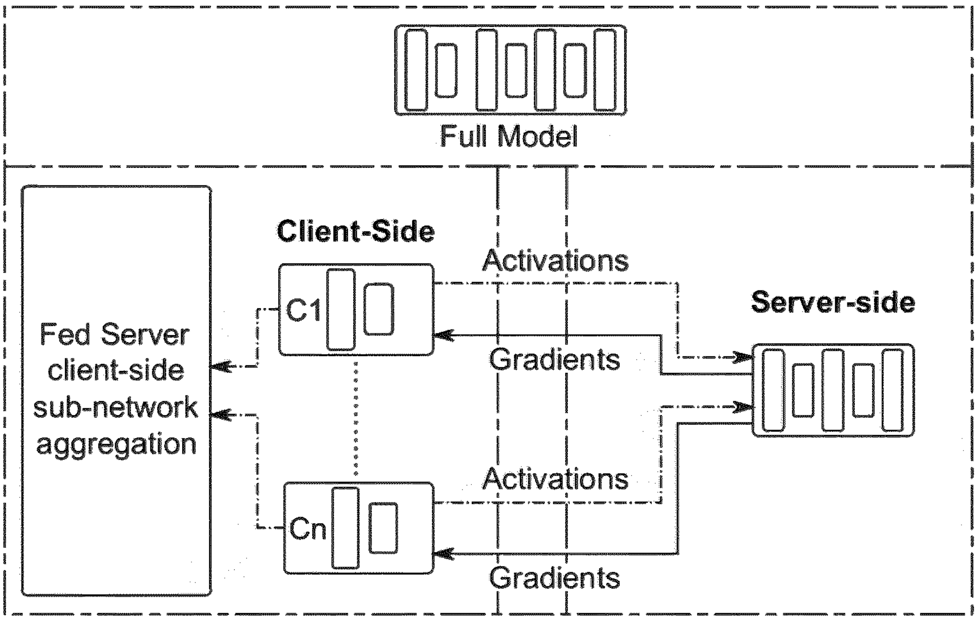


FIG. 3B
(PRIOR ART)

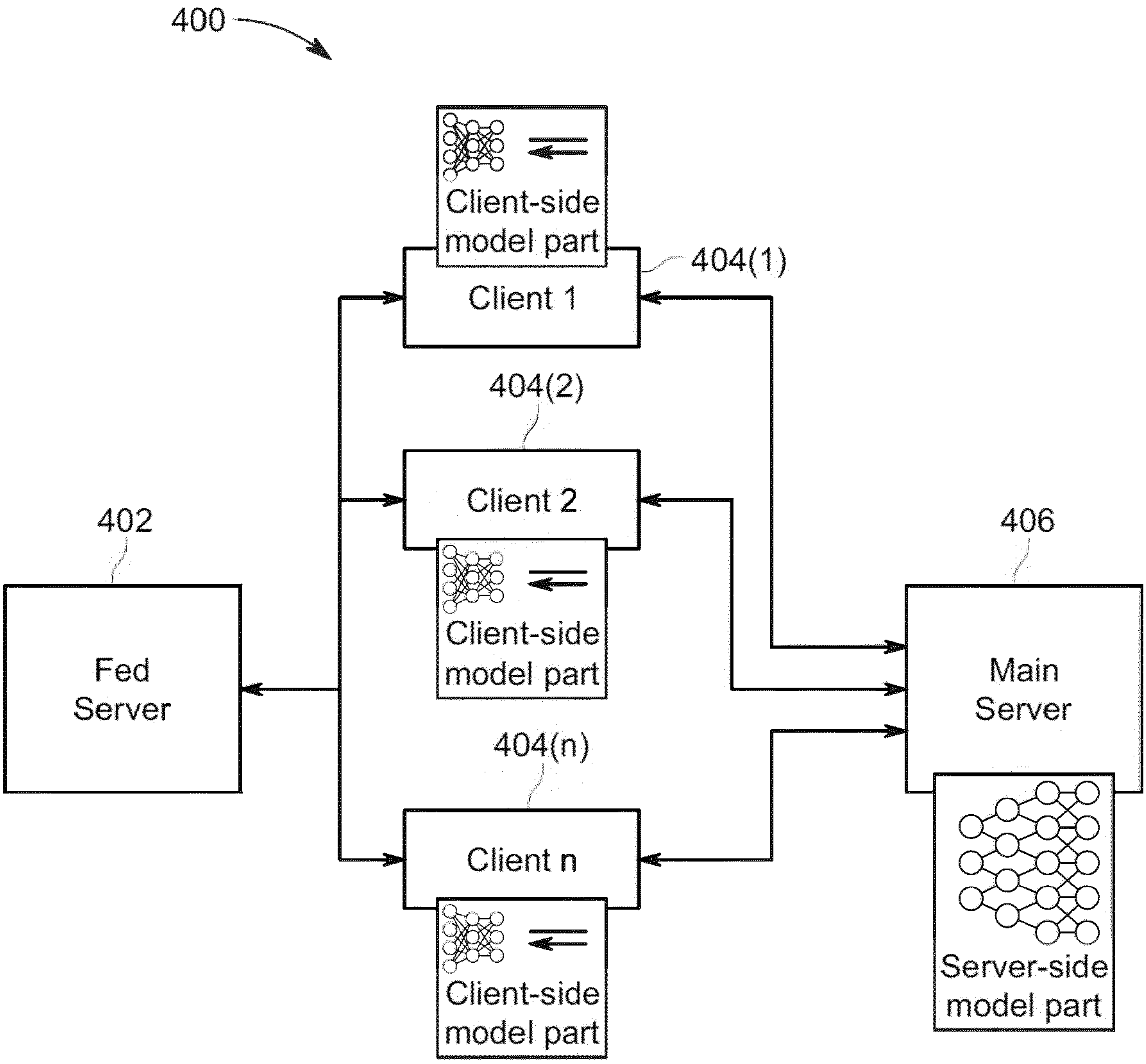


FIG. 4
(PRIOR ART)

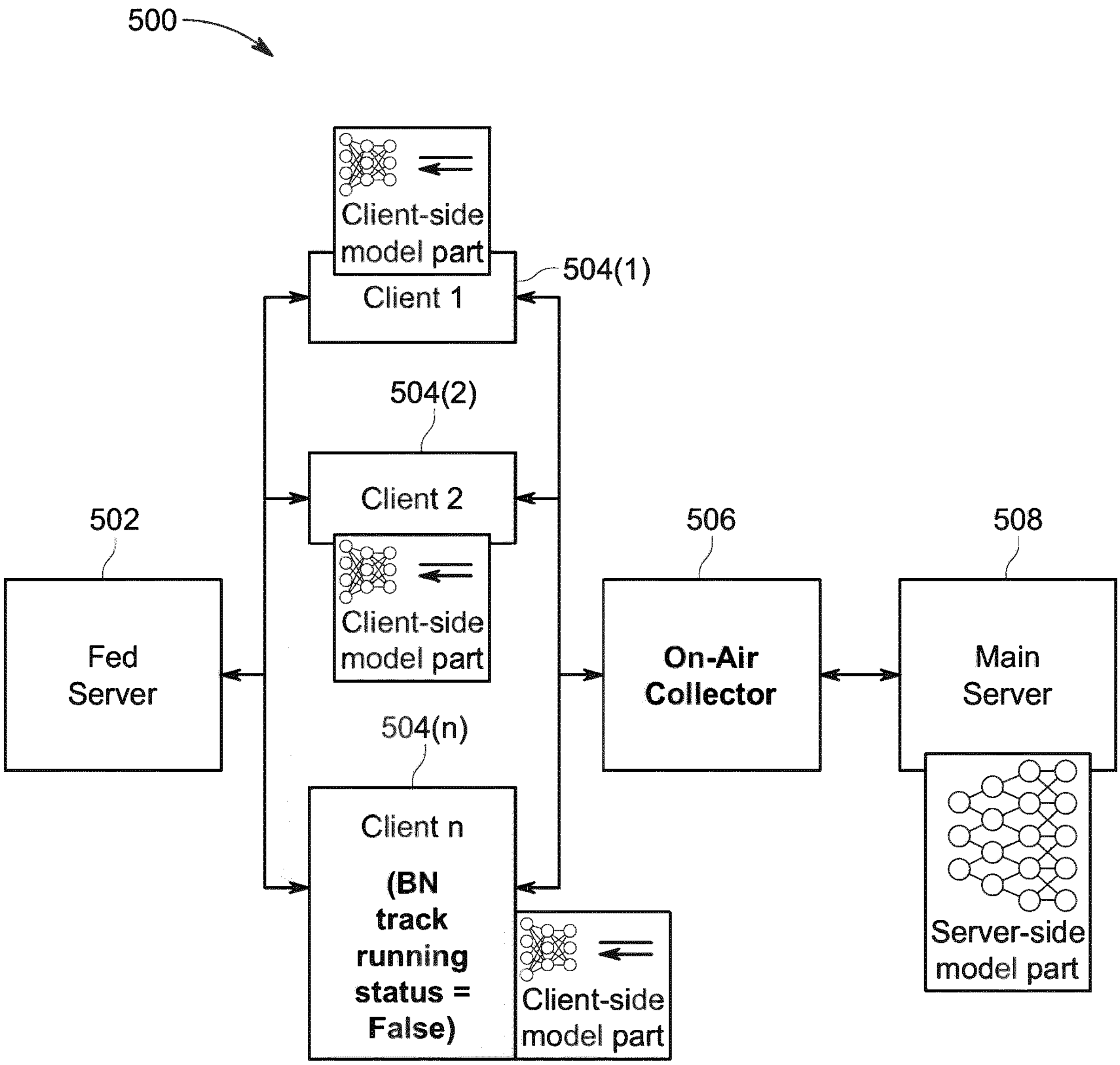
500
Client-side
model part
504(1)
Client 1
504(2)
Client 2
Client-side
model part
502
Fed
Server
506
On-Air
Collector
508
Main
Server
504(n)
Client n
(BN
track
running
status =
False)
Client-side
model part
Server-side
model part

FIG. 5

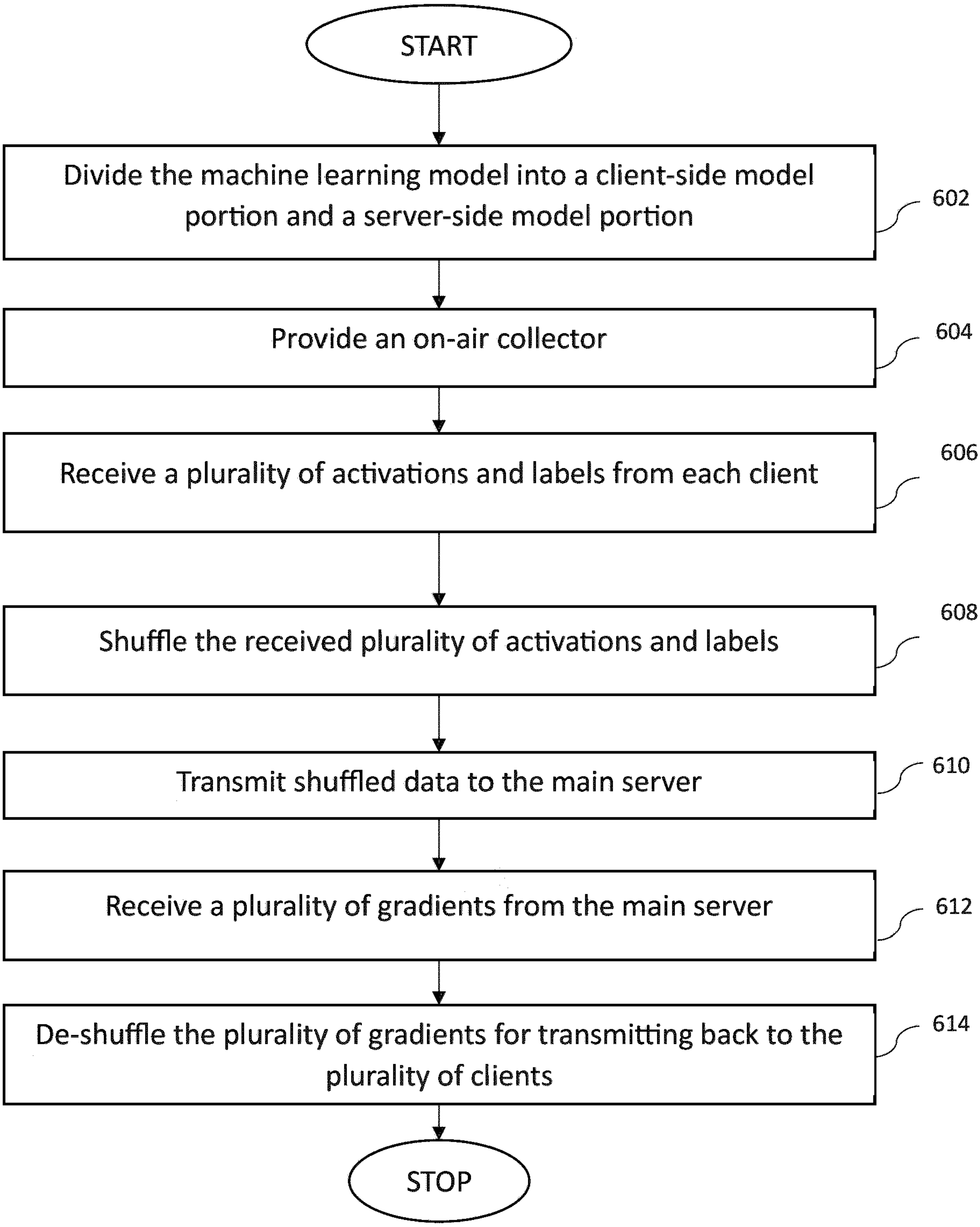
START
Divide the machine learning model into a client-side model portion and a server-side model portion
602
Provide an on-air collector
604
Receive a plurality of activations and labels from each client
606
Shuffle the received plurality of activations and labels
608
Transmit shuffled data to the main server
610
Receive a plurality of gradients from the main server
612
De-shuffle the plurality of gradients for transmitting back to the plurality of clients
614
STOP

FIG.6

| Dataset | Architecture | Technique | Training iid | Testing iid | SD and VAR | Precision@1 | Recall | F1Score | Accuracy |
|---|---|---|---|---|---|---|---|---|---|
| CIFAR-100 | R56 | SFPL | × | × | CMSD | 0.7331 | 0.7216 | 0.7215 | 72.16 |
| | | SFPL | × | × | RMSD | 0.6623 | 0.6313 | 0.628 | 63.13 |
| | | SFPL | × | ✓ | CMSD | 0.6319 | 0.598 | 0.5915 | 59.8 |
| | | SFLV2 | × | × | RMSD | 0.0047 | 0.014 | 0.0036 | 1.4 |
| | | FedAws | × | - | - | 69.6 | - | - | - |
| CIFAR-100 | R32 | SFPL | × | × | CMSD | 0.6955 | 0.6677 | 0.666 | 66.77 |
| | | SFPL | × | × | RMSD | 0.6265 | 0.5926 | 0.5811 | 59.26 |
| | | SFPL | × | ✓ | CMSD | 0.608 | 0.5542 | 0.5475 | 55.42 |
| | | SFLV2 | × | × | RMSD | 0.0213 | 0.0205 | 0.008156 | 2.05 |
| | | FedAws | × | - | - | 67.9 | - | - | - |
| CIFAR-10 | R32 | SFPL | × | × | CMSD | 0.9232 | 0.9233 | 0.923 | 92.33 |
| | | SFPL | × | × | RMSD | 0.8905 | 0.8859 | 0.8858 | 88.59 |
| | | SFPL | × | ✓ | CMSD | 0.8909 | 0.8883 | 0.8884 | 88.83 |
| | | SFLV2 | × | × | RMSD | 0.01 | 0.1 | 0.01818 | 10 |
| | | FedAws | × | - | - | 92.4 | - | - | - |
| CIFAR-10 | R8 | SFPL | × | × | CMSD | 0.8537 | 0.8515 | 0.8508 | 85.15 |
| | | SFPL | × | × | RMSD | 0.8049 | 0.7989 | 0.7987 | 79.89 |
| | | SFPL | × | ✓ | CMSD | 0.7847 | 0.7743 | 0.7739 | 77.43 |
| | | SFLV2 | × | × | RMSD | 0.01 | 0.1 | 0.0181 | 10 |
| | | FedAws | × | - | - | 86.3 | - | - | - |

FIG.7

Europäisches Patentamt
European Patent Office
Office européen des brevets

# EUROPEAN SEARCH REPORT

Application Number
EP 23 17 1686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANSONG GAO ET AL: "Evaluation and Optimization of Distributed Machine Learning Techniques for Internet of Things", ARXIV.ORG, CORNELL UNIVERSITY LIBRARY, 201 OLIN LIBRARY CORNELL UNIVERSITY ITHACA, NY 14853, 3 March 2021 (2021-03-03), XP081905377, * abstract * * page 1, left-hand column, line 1 - page 13, left-hand column, line 6 * ----- | 1-12 | INV. G06N3/098 G06N3/084 G06N3/09 G06N3/045 ADD. G06N3/063 |
| A | ZIQING FAN ET AL: "FedSkip: Combatting Statistical Heterogeneity with Federated Skip Aggregation", ARXIV.ORG, CORNELL UNIVERSITY LIBRARY, 201 OLIN LIBRARY CORNELL UNIVERSITY ITHACA, NY 14853, 14 December 2022 (2022-12-14), XP091394269, * abstract * * page 1, left-hand column, line 1 - page 9, left-hand column, line 10 * * page 10, left-hand column, line 1 - right-hand column, last line * ----- | 1-12 | |
| | | | TECHNICAL FIELDS SEARCHED (IPC) |
| | | | G06N |

The present search report has been drawn up for all claims

1

| Place of search | Date of completion of the search | Examiner |
|---|---|---|
| The Hague | 5 September 2023 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)